(19) Europäisches Patentamt
European Patent Office
Office européen des brevets

(11) **EP 4 460 108 A1**

(12) **EUROPEAN PATENT APPLICATION**
published in accordance with Art. 153(4) EPC

(43) Date of publication:
**06.11.2024 Bulletin 2024/45**

(21) Application number: **22914558.6**

(22) Date of filing: **23.12.2022**

(51) International Patent Classification (IPC):
*H04W 52/02* *(2009.01)*

(52) Cooperative Patent Classification (CPC):
**H04W 52/02; H04W 72/0446; H04W 72/0453;
H04W 74/08;** Y02D 30/70

(86) International application number:
**PCT/CN2022/141546**

(87) International publication number:
**WO 2023/125304 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2021 CN 202111640856**

(71) Applicant: **VIVO MOBILE COMMUNICATION CO.,
LTD.
Dongguan, Guangdong 523863 (CN)**

(72) Inventors:
• **WANG, Lihui
Dongguan, Guangdong 523863 (CN)**
• **PAN, Xueming
Dongguan, Guangdong 523863 (CN)**

(74) Representative: **Conti, Marco
Bugnion S.p.A.
Via di Corticella, 87
40128 Bologna (IT)**

(54) **COMMUNICATION OPERATION EXECUTION METHOD, APPARATUS, TERMINAL, AND STORAGE MEDIUM**

(57) This application provides a communication operation execution method and apparatus, a terminal, and a storage medium. The communication operation execution method includes: executing, by a terminal, a communication operation based on a relaxed processing capability, where the relaxed processing capability is a relaxed processing capability in time, and the communication operation includes at least one of the following: a communication operation associated with initial access; and a communication operation associated with random access.

```
                    ┌─────────┐
                    │  Start  │
                    └────┬────┘
                         │
                         ▼
    ┌─────────────────────────────────────────────┐
    │ A terminal executes a communication operation │──── 201
    │       based on a relaxed processing capability │
    └────────────────────┬────────────────────────┘
                         │
                         ▼
                    ╭─────────╮
                    │   End   │
                    ╰─────────╯
```

FIG. 2

**Description**

**CROSS-REFERENCE TO RELATED APPLICATIONS**

This application claims priority to Chinese Patent Application No. 202111640856.1, filed in China on December 29, 2021, which is incorporated herein by reference in its entirety.

**TECHNICAL FIELD**

This application pertains to the field of communications technologies, and specifically, relates to a communication operation execution method and apparatus, a terminal, and a storage medium.

**BACKGROUND**

In communication systems, the processing time for terminals to execute communication operations is often determined by their processing capabilities. Currently, terminal processing capabilities defined in communication systems mainly include UE processing capability 1 (UE processing capability 1). Terminals primarily execute communication operations associated with initial access based on UE processing capability 1, and execute communication operations associated with random access based on UE processing capability 1. The processing time determined by UE processing capability 1 is often relatively short. Consequently, in practical applications, some terminals may fail to complete communication operations associated with initial access within the processing time corresponding to UE processing capability 1, or some terminals may fail to complete communication operations associated with random access within the processing time corresponding to UE processing capability 1, leading to relatively poor reliability in terminal access.

**SUMMARY**

Embodiments of this application provide a communication operation execution method and apparatus, a terminal, and a storage medium, so as to solve the problem of poor reliability in terminal access.

According to a first aspect, a communication operation execution method is provided and includes: executing, by a terminal, a communication operation based on a relaxed processing capability, where the relaxed processing capability is a relaxed processing capability in time, and the communication operation includes at least one of the following:

a communication operation associated with initial access; and
a communication operation associated with random access.

According to a second aspect, a communication operation execution apparatus is provided and includes: an execution module, configured to execute a communication operation based on a relaxed processing capability, where the relaxed processing capability is a relaxed processing capability in time, and the communication operation includes at least one of the following:

a communication operation associated with initial access; and
a communication operation associated with random access.

According to a third aspect, a terminal is provided and includes a processor and a memory, where a program or instructions are stored in the memory and capable of running on the processor, and when the program or instructions are executed by the processor, the steps of the communication operation execution method according to the embodiments of this application are implemented.

According to a fourth aspect, a terminal is provided and includes a processor and a communication interface, where the communication interface is configured to execute a communication operation based on a relaxed processing capability, where the relaxed processing capability is a relaxed processing capability in time, and the communication operation includes at least one of the following: a communication operation associated with initial access; and a communication operation associated with random access.

According to a fifth aspect, a readable storage medium is provided, where the readable storage medium stores a program or instructions, and when the program or instructions are executed by a processor, the steps of the communication operation execution method according to the embodiments of this application are implemented.

According to a sixth aspect, a chip is provided, where the chip includes a processor and a communication interface, the communication interface is coupled to the processor, and the processor is configured to run a program or instructions to implement the communication operation execution method according to the embodiments of this application.

According to a seventh aspect, an embodiment of this application provides a computer program product, where the computer program product is stored in a storage medium, and the computer program product is executed by at least one processor so as to implement the communication operation execution method according to the embodiments of this application.

According to an eighth aspect, a communication device is provided, where the communication device is configured to execute the steps of the communication operation execution method according to the embodiments of this application.

In the embodiments of this application, a terminal executes a communication operation based on a relaxed processing capability, where the relaxed processing capability is a relaxed processing capability in time, and the communication operation includes at least one of the following: a communication operation associated with initial access; and a communication operation associated with random access. In this way, at least one of the communication operation associated with initial access and the communication operation associated with random access can be executed based on the relaxed processing capability in time, such that the reliability of terminal access can be improved.

## BRIEF DESCRIPTION OF DRAWINGS

FIG. 1 is a block diagram of a wireless communication system to which embodiments of this application may be applied;

FIG. 2 is a flowchart of a communication operation execution method according to an embodiment of this application;

FIG. 3 is a structural diagram of a communication operation execution apparatus according to an embodiment of this application;

FIG. 4 is a structural diagram of a communication device according to an embodiment of this application; and

FIG. 5 is a structural diagram of a terminal according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for illustration purposes, NR terms are used in most of the following descriptions, and these technologies may also be applied to other applications than the NR system application, for example, the 6th generation (6th Generation, 6G) communication system.

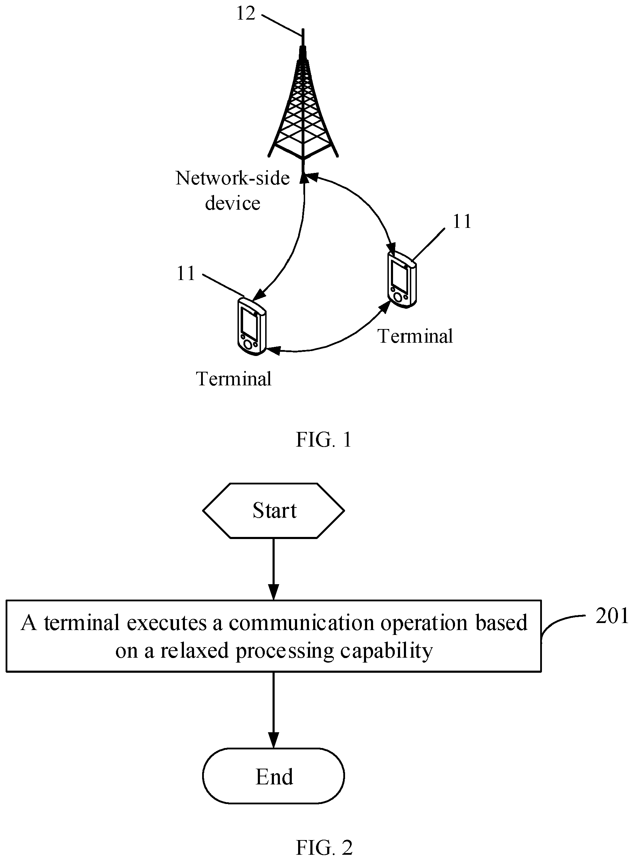

FIG. 1 is a block diagram of a wireless communication system to which the embodiments of this application may be applied. The wireless communication system includes a terminal 11 and a network-side device 12.

In the embodiments of this application, the terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that the terminal is not limited to any particular type in the embodiments of this application.

The network-side device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Network, WLAN) access point, or a Wi-Fi node. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application for illustration, but a specific type of the base station is not limited. The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

The following describes in detail the communication operation execution method and apparatus, UE, terminal, and storage medium provided in the embodiments of this application by using some embodiments and application scenarios thereof with reference to the accompanying drawings.

Refer to FIG. 2. FIG. 2 is a flowchart of a communication operation execution method according to an embodiment of this application. As shown in FIG. 2, the method includes the following steps.

Step 201: A terminal executes a communication operation based on a relaxed processing capability, where the relaxed processing capability is a relaxed processing capability in time, and the communication operation includes at least one of the following:

a communication operation associated with initial access; and
a communication operation associated with random access.

The relaxed processing capability may be a processing capability defined in a protocol, and the relaxed processing capability may be a processing capability for further relaxing (also called relieving) a terminal processing time on the basis of the processing capability defined in the protocol.

In some embodiments, the relaxed processing capability can be called UE processing capability 3 (UE processing capability 3), and a processing time of the processing capability is longer than a processing time of UE processing capability 1 (UE processing capability 1) defined in a protocol. Optionally, the processing time of the relaxed processing capability can also be longer than the processing time of UE processing capability 2 (UE processing capability 2) defined in a protocol.

It should be noted that in the embodiments of this application, the relaxed processing capability can also be called a relaxed processing time capability.

The terminal may be a terminal (RedCap UE) with a reduced capability or a normal terminal.

The communication operation associated with initial access includes at least one of the following:
uplink transmission before initial access, downlink reception before initial access, uplink transmission during initial access, downlink reception during initial access, uplink transmission after initial access, and downlink reception after initial access.

The communication operation associated with random access may include at least one of the following:

uplink transmission before random access, downlink reception before random access, uplink transmission during random access, downlink reception during random access, uplink transmission after random access, and downlink reception after random access.

In this embodiment of this application, through the foregoing step, at least one of the communication operation associated with initial access and the communication operation associated with random access can be executed based on the relaxed processing capability in time, to be specific, the processing time of at least one of the communication operation associated with initial access and the communication operation associated with random access is relaxed such that the reliability of terminal access can be improved, and the complexity and cost of the terminal can also be reduced. For example, some terminals with a reduced capability (RedCap UE) can have a longer processing time to complete access-related communication operations based on the foregoing relaxed processing capability, which can reduce the complexity and cost of terminals and improve the reliability of terminal access.

In an optional embodiment, the relaxed processing capability includes at least one of the following:
an uplink relaxed processing capability, a downlink relaxed processing capability, and a channel state information (Channel State Information, CSI) relaxed processing capability.

The uplink relaxed processing capability refers to relaxing a processing time for the terminal to process an uplink transmission, for example, relaxing a processing time for the terminal to process a physical uplink shared channel (Physical Uplink Shared Channel, PUSCH), or relaxing a processing time for the terminal to process a physical uplink control channel (Physical Uplink Control Channel, PUCCH).

The downlink relaxed processing capability refers to relaxing a processing time for the terminal to process a downlink transmission, for example, relaxing a processing time for the terminal to process a physical downlink shared channel (Physical Downlink Shared Channel, PDSCH) or relaxing a processing time for the terminal to process a physical downlink control channel (Physical Downlink Control Channel, PDCCH).

The foregoing CSI relaxed processing capability refers to relaxing at least one of a CSI processing time and a CSI calculation time. In addition, the foregoing CSI relaxed processing capability can indicate whether a terminal E supports a CSI relaxed processing/computation capability through CSI processing type 3 (csi-ProcessingType3) or CSI computation type 3(csi-ComputationType3).

Optionally, the downlink relaxed processing capability includes:

a PDSCH relaxed processing capability; where
based on the PDSCH relaxed processing capability, the number of PDSCHs supported or processed by the terminal in a target time period is N, the PDSCH is a PDSCH scrambled with a radio network temporary identifier (Radio Network Temporary Identifier, RNTI) and carrying a plurality of different transport blocks, and N is an integer greater than or equal to 1.

The PDSCH relaxed processing capability may be a processing capability of indicating whether the terminal supports PDSCH relaxation through PDSCH processing type 3 (PDSCH-ProcessingType3).

The target time period may be a time resource unit, for example, one slot.

The RNTI may include at least one of the following:
a cell radio network temporary identifier (Cell Radio Network Temporary Identifier, C-RNTI), a modulation and coding scheme cell-radio network temporary identifier (Modulation and Coding Scheme Cell-Radio Network Temporary Identifier, MCS-C-RNTI), a configured scheduling radio network temporary identifier (Configured Scheduling Radio Network Temporary Identifier, CS-RNTI), a temporary cell-radio network temporary identifier (temporary cell-radio network temporary identifier, TC-RNTI).

The number of PDSCHs supported or processed by the terminal in the target time period based on the PDSCH relaxed processing capability is N, which may be indicated by PDSCH-ProcessingType3-DifferentTB-PerSlot, for example, indicating the number of PDSCHs, scrambled with C-RNTI, TC-RNTI, or CS-RNTI and carrying different transport blocks, that can be supported or processed by the terminal within one target time period (preferably, the target time period is one slot) of one carrier/bandwidth part (Bandwidth Part, BWP) within relaxed processing time, where the number may be at least one of the following:
1, 2, 4, and 7.

In this embodiment, the processing performance of the terminal in processing PDSCH can be improved.

Optionally, the uplink relaxed processing capability includes:

a PUSCH relaxed processing capability; where
based on the PUSCH relaxed processing capability, the number of PUSCHs supported or processed by the terminal in a target time period is M, the PUSCH is a PUSCH scrambled with an RNTI and carrying a plurality of different transport blocks, and M is an integer greater than or equal to 1.

The PUSCH relaxed processing capability may be a processing capability of indicating whether the terminal supports PUSCH relaxation through PUSCH processing type 3.

The RNTI may include at least one of the following:

C-RNTI, MCS-C-RNTI, CS-RNTI, and TC-RNTI.

The number of PUSCHs supported or processed by the terminal in the target time period based on the PUSCH relaxed processing capability is M, which may be indicated by PUSCH-ProcessingType3-DifferentTB-PerSlot, for example, indicating the number of PUSCHs, scrambled with C-RNTI, TC-RNTI, or CS-RNTI and carrying different transport blocks, that can be supported or processed by the terminal within one target time period (preferably, the target time period is one slot) of one carrier/BWP within relaxed processing time, where the number may be at least one of the following:

1, 2, 4, and 7.

Optionally, the relaxed processing capability is configured in at least one of the following ways:

the uplink relaxed processing capability is configured separately;
the downlink relaxed processing capability is configured separately;
the CSI relaxed processing capability is configured separately;
the uplink relaxed processing capability and the downlink relaxed processing capability are configured jointly/commonly; and
the uplink relaxed processing capability, the downlink relaxed processing capability, and the CSI relaxed processing capability are configured jointly/commonly.

The foregoing separate configuration of the uplink relaxed processing capability and the separate configuration of the downlink relaxed processing capability may be that the uplink and downlink relaxed processing time capabilities are each configured separately, respectively, for example, pdsch-ProcessingType3 and pusch-ProcessingType3 are each independently configured.

The foregoing joint/common configuration of the uplink relaxed processing capability and the downlink relaxed processing capability may be that the terminal is configured with uplink relaxed processing capability and downlink relaxed processing capability in a joint or common manner.

The separate configuration of the CSI relaxed processing capability may be separate configuration of csi-ProcessingType3 or csi-Computing Type3, for example, separate configuration of the uplink relaxed processing capability, the downlink relaxed processing capability, and the CSI relaxed processing capability, or separate configuration of the CSI relaxed processing capability, but joint/common configuration of the uplink relaxed processing capability and the downlink relaxed processing capability.

The foregoing joint/common configuration of the uplink relaxed processing capability, the downlink relaxed processing capability, and the CSI relaxed processing capability may be that the terminal is configured with uplink relaxed processing capability, downlink relaxed processing capability, and CSI relaxed processing capability in a joint or common manner.

Alternatively, in some embodiments, the uplink relaxed processing capability and the CSI relaxed processing capability may be jointly/commonly configured, or the downlink relaxed processing capability and the CSI relaxed processing capability may be jointly/commonly configured.

In this embodiment, a corresponding relaxed processing capability can be flexibly configured for the terminal in the foregoing configuration mode to improve the processing capability of the terminal.

Optionally, in a case that the terminal is configured with the relaxed processing capability, the terminal is further configured with a target characteristic, where the target characteristic includes at least one of the following:

a maximum supported bandwidth is less than or equal to a preset bandwidth threshold; and
a data rate is less than or equal to a preset rate threshold.

The preset bandwidth threshold may be 5 MHz or another bandwidth threshold defined in a protocol, which is not limited. With the maximum supported bandwidth being less than or equal to the preset bandwidth threshold, the bandwidth requirements of the terminal can be reduced, thereby reducing the complexity and cost of the terminal.

The data rate may include at least one of a received data rate supported by the terminal and a transmitted data rate supported by the terminal. For example, the data rate is less than or equal to the preset rate threshold, which means that a maximum received data rate supported by the terminal is less than or equal to the preset rate threshold, and/or a maximum transmitted data rate supported by the terminal is less than or equal to the preset rate threshold, where the preset rate threshold may be 10 Mbps or may be another rate threshold defined by a protocol, which is not limited. With the data rate being less than or equal to the preset rate threshold, the peak value supported by the terminal can be reduced, thereby reducing the complexity and cost of the terminal.

In this embodiment, terminals configured with a target characteristic are configured with a relaxed processing capability so as to improve the access reliability of these terminals.

In an optional embodiment, the terminal reports/indicates support or non-support of UE processing capability 1, where a processing time of the relaxed processing capability is greater than a processing time of a first processing capability.

The reporting/indication may be a reporting or indication to a network-side device.

In this embodiment, UE processing capability 1 is an optional capability for the terminal, for example, PDSCH processing time capability 1 and/or PUSCH processing time capability 1 is an optional capability, and the terminal can report/indicate support or non-support of UE processing capability 1 through a user capability.

As the terminal reports/indicates support or non-support of UE processing capability 1, the network-side device can flexibly configure a corresponding parameter for the terminal according to a terminal processing capability, such that the parameter of the terminal can be more easily matched with the terminal processing capability, thereby improving the terminal processing capability.

In an optional embodiment, in a case that the terminal is configured with the relaxed processing capability, the terminal is further configured with a first processing capability; where

a processing time of the relaxed processing capability is longer than a processing time of the first processing capability.

The configuration of the first processing capability may be that the terminal itself has the first processing capability, or that the network-side device configures the first processing capability for the terminal through a configuration parameter.

In this embodiment, in a case that the terminal has the first processing capability and the relaxed processing capability, the communication operation can be executed based on the relaxed processing capability, thereby reducing the complexity and cost of the terminal and improving the reliability of terminal access.

In an optional embodiment, a subcarrier spacing (Subcarrier Spacing, SCS) to which the relaxed processing capability is applicable includes at least one of the following:

15 KHz SCS, 30 KHz SCS, 60 KHz SCS, and 120 KHz SCS; where
PDSCH decoding times (PDSCH decoding time) are different for different SCSs in the relaxed processing capability; and/or PUSCH preparation times (PUSCH decoding time) are different for different SCSs in the relaxed processing capability.

The foregoing PDSCH decoding times being different for different SCSs in the relaxed processing capability may be that a protocol prescribes or a network side configures different SCSs corresponding to different PDSCH decoding times; and the PUSCH preparation times being different for different SCSs in the relaxed processing capability may be that a protocol prescribes or a network side configures different SCSs corresponding to different PUSCH preparation times.

In this embodiment, the relaxed processing capability can be applied to various SCSs, such that the terminal can relax processing times in a plurality of SCSs.

In some embodiments, for some SCSs, the relaxed processing time of the relaxed processing capability can be applied to a normal cyclic prefix (normal CP) and/or an extended cyclic prefix (extended CP), for example, for 60 KHz SCS, the relaxed processing time can be applied to a normal cyclic prefix and/or an extended cyclic prefix.

In an optional embodiment, for the relaxed processing capability, the terminal needs to report/indicate support of the relaxed processing capability through a terminal capability;

for the relaxed processing capability, the terminal reports/indicates, through a terminal capability, whether the terminal supports the relaxed processing capability; or
for the relaxed processing capability, the terminal does not report/indicate the relaxed processing capability.

The terminal needs to report/indicate support or non-support of the relaxed processing capability through a terminal capability, which may be that the relaxed processing capability is an optional capability of the terminal, but the terminal is required to report/indicate the relaxed processing capability through a user capability. In a case that the relaxed processing capability is an optional capability of the terminal, the terminal is a terminal supporting the relaxed processing capability.

The terminal reports/indicates, through a terminal capability, whether the terminal supports the relaxed processing capability, which may be that the relaxed processing capability is an optional capability of the terminal, and the target terminal can report/indicate its support or non-support of the relaxed processing time capability through a user capability.

For the relaxed processing capability, the terminal does not report/indicate the relaxed processing capability, which may be that the relaxed processing capability is an optional capability of the terminal, and the relaxed processing capability is not a user capability relevant to the foregoing terminal definitions, that is, the terminal does not report/indicate the capability (optional without capability signaling).

In an optional embodiment, the communication operation associated with initial access includes at least one of the following:

uplink transmission in an initial access procedure; and
downlink reception in an initial access procedure; and
the communication operation associated with random access includes at least one of the following:

uplink transmission in a random access procedure; and
downlink reception in a random access procedure.

In this embodiment, the processing time of at least one of uplink transmission in an initial access procedure, downlink reception in an initial access procedure, uplink transmission in a random access procedure, and downlink reception in a random access procedure can be relaxed.

In an optional embodiment, the executing, by a terminal, a communication operation based on a relaxed processing time capability includes:

executing, by the terminal, the communication operation based on the relaxed processing capability in a case of meeting a first condition; where
the first condition includes at least one of the following:

a network-side device has configured/enabled/indicated a BWP for the terminal;
a network-side device has configured/enabled/indicated a common search space (Common Search Space, CSS) for the terminal;
a network-side device has configured/enabled/indicated, for the terminal, early identification of the terminal enabled/executed through a physical random access channel (Physical Random Access Channel, PRACH);
a network-side device has configured/enabled/indicated, for the terminal, early identification of the terminal enabled/executed through a PUSCH;
a bandwidth of an initial BWP exceeds a maximum bandwidth capacity of a baseband side of the terminal;
a bandwidth of a control resource set configured by a master information block (Master Information Block, MIB) exceeds a maximum bandwidth capacity of a baseband side of the terminal;
a bandwidth occupied by a scheduled/configured frequency domain resource for downlink reception exceeds a maximum bandwidth capacity of a baseband (baseband, BB) side of the terminal; and
a bandwidth occupied by a scheduled/configured frequency domain resource for uplink transmission exceeds a maximum bandwidth capacity of a baseband side of the terminal.

The foregoing BWP is an initial uplink/downlink BWP, for example, an initial downlink/uplink BWP independently configured for a RedCap terminal.

The foregoing CSS may be type 0/0A/1/2 CSS (Type 0/0A/1/2 CSS).

The foregoing PRACH may include a PRACH of Msg. 1/ Msg.A in random access procedure; and the foregoing PUSCH may include a PUSCH of Msg.1/ Msg.A in a random access procedure.

The foregoing early identification may be that the type of the terminal can be identified by the network-side device in the random access procedure of the terminal. For example, in a random access procedure, the type of the terminal can be identified as a RedCap terminal or a normal terminal.

The foregoing control resource set configured by the MIB may be a control resource set (Control resource set, CORESET)#0 configured by the MIB.

In this embodiment, the initial DL/UL BWP/CORESET#0 may be an initial DL/UL BWP/ CORESET#0 separately/independently configured for the terminal, or an initial DL/UL BWP/CORESET#0 shared by the terminal and another terminal (for example, a terminal of another type).

The bandwidth occupied by the frequency domain resource for downlink reception may be a bandwidth obtained by subtracting a smallest physical resource block index/subcarrier (PRB index/subcarrier) occupied by downlink reception from a largest PRB index/subcarrier occupied by downlink reception; and the bandwidth occupied by the frequency domain resources for uplink transmission may be a bandwidth obtained by subtracting a smallest physical resource block index/subcarrier (PRB index/subcarrier) occupied by uplink transmission from a largest PRB index/subcarrier occupied by uplink transmission.

Optionally, the method further includes:

in a case that the terminal does not meet the first condition, the terminal executes the communication operation based on a first processing capability; where

a processing time of the relaxed processing capability is longer than a processing time of the first processing capability.

In this embodiment, in a case that a terminal in an RRC-idle/inactive state (RRC-idle/inactive state) does not meet the first condition, the terminal uses the first processing capability (UE processing capability 1) for uplink transmission and downlink reception in initial access/random access procedure.

For example, if a network has configured/enabled/indicated at least one of the following for a target terminal, the target terminal uses the relaxed processing capability for uplink transmission and downlink reception, otherwise, the target terminal uses the first processing capability of the UE for uplink transmission and downlink reception:

separate/independent initial DL/UL BWP;
separate/independent Type 0/0A/1/2 CSS;
enable/execute early identification of the target terminal through Msg.1/Msg.A PRACH;
enable/execute early identification of the target terminal through Msg.3/Msg.A PUSCH;
a bandwidth of an initial DL/UL BWP or CORESET#0 configured by MIB exceeds a maximum bandwidth capacity of a baseband side of the target terminal; and
a bandwidth occupied by a scheduled/configured frequency domain resource for downlink reception and/or uplink transmission exceeds a maximum bandwidth capacity of a baseband side of the target terminal.

In an optional embodiment, at least one of the following related to the communication operation is determined based on the relaxed processing capability:
uplink transmission timeline, and uplink transmission timing.

The foregoing uplink transmission timeline can determine an uplink transmission time or a spacing between uplink transmission and downlink reception. The foregoing uplink transmission timing may represent an uplink transmission time, for example, an uplink transmission slot, and a symbol.

An uplink processing time of the terminal can be relaxed through the uplink transmission timeline/timing, so as to improve the reliability of uplink transmission.

Optionally, in a case that the communication operation includes transmitting a PUSCH with a random access response (Random Access Response, RAR) uplink grant, a shortest time between a PDSCH carrying the RAR uplink grant (RAR UL grant) and the PUSCH is determined by the relaxed processing capability; and/or
in a case that the communication operation includes transmitting a PUSCH scheduled by a fallback RAR, a shortest time between a PDSCH carrying the fallback RAR and the PUSCH is determined by the relaxed processing capability.

The minimum time can be determined by PDSCH processing time and PUSCH preparation time, and the PDSCH processing time is determined by the relaxed processing capability, and/or the PUSCH preparation time is determined by the relaxed processing capability.

For example, the terminal expects to receive a minimum time between a last symbol of PDSCH carrying the RAR UL grant/fallback RAR and a first symbol of PUSCH scheduled by the RAR UL grant is greater than or equal to $N_{T,1} + N_{T,2} + m1$ milliseconds, where at least one of $N_{T,1}$ and $N_{T,2}$ is determined by the relaxed processing capability, and m1 is a constant, for example, 0.5. For example, $N_{T,1}$ is duration of N1 symbols corresponding to the PDSCH processing time of the relaxed processing capability (UE processing capability 3) when a PDSCH DMRS is added, and $N_{T,2}$ is duration of N2 symbols corresponding to the PUSCH preparation time of the relaxed processing capability (UE processing capability 3).

In this embodiment, the processing time of PUSCH can be relaxed.

Optionally, in a case that an SCS corresponding to the PDSCH and an SCS corresponding to the PUSCH are different, the PDSCH processing time is determined by the relaxed processing capability and a first SCS, and/or the PUSCH preparation time is determined by the relaxed processing capability and a first SCS; where
the first SCS is the smaller of two SCSs corresponding to the PDSCH and PUSCH.

In this embodiment, in a case that the SCSs corresponding to PDSCH and PUSCH are different, at least one of the PDSCH processing time and the PUSCH preparation time can be determined by the smaller one of the two SCSs, so as to accurately determine the shortest time. For example, to determine a minimum time interval between the last symbol of PDSCH carrying RAR UL grant and the first symbol of PUSCH scheduled by the RAR UL grant, the terminal considers that $N_{T,1}$ and $N_{T,2}$ correspond to the smaller one of SCS configurations corresponding to PDSCH and PUSCH.

Optionally, the communication operation includes:
transmitting a PUSCH in slot n+X, where slot n is a slot in which the terminal has received a last symbol of downlink signaling for scheduling uplink transmission, a value of X is determined by the relaxed processing capability, and the PUSCH includes at least one of the following:

PUSCH associated with initial access; and

PUSCH associated with random access.

The slot N is a slot in which the terminal has received the last symbol of downlink signaling for scheduling uplink transmission, such that the terminal can transmit PUSCH in slot N+X.

The value of X may include one of the following:

$$X=K_2, \ X=K_2+\Delta, \ X=K_2+\Delta+\Delta',$$

where
$K_2$ represents a slot offset, $\Delta$ and $\Delta'$ are constants related to SCS, and a value of at least one of $K_2$, $\Delta$, and $\Delta'$ is determined by the relaxed processing capability.

In some embodiments, a value of $K_2$ determined by the relaxed processing capability is greater than a value of $K_2$ determined by the first processing capability.

For example, the value of $K_2$ may be shown in Table 1 or Table 2 below, where the value of j is defined in Table 3 below:

**Table 1**

| Row index | PUSCH mapping type | $K_2$ | S | L |
|---|---|---|---|---|
| 1 | Type A | j | 0 | 14 |
| 2 | Type A | j | 0 | 12 |
| 3 | Type A | j | 0 | 10 |
| 4 | Type B | j | 2 | 10 |
| 5 | Type B | j | 4 | 10 |
| 6 | Type B | j | 4 | 8 |
| 7 | Type B | j | 4 | 6 |
| 8 | Type A | j+1 | 0 | 14 |
| 9 | Type A | j+1 | 0 | 12 |
| 10 | Type A | j+1 | 0 | 10 |
| 11 | Type A | j+2 | 0 | 14 |
| 12 | Type A | j+2 | 0 | 12 |
| 13 | Type A | j+2 | 0 | 10 |
| 14 | Type B | j | 8 | 6 |
| 15 | Type A | j+3 | 0 | 14 |
| 16 | Type A | j+3 | 0 | 10 |

**Table 2**

| Row index | PUSCH mapping type | $K_2$ | S | L |
|---|---|---|---|---|
| 1 | Type A | j | 0 | 8 |
| 2 | Type A | j | 0 | 12 |
| 3 | Type A | j | 0 | 10 |
| 4 | Type B | j | 2 | 10 |
| 5 | Type B | j | 4 | 4 |
| 6 | Type B | j | 4 | 8 |
| 7 | Type B | j | 4 | 6 |

(continued)

| Row index | PUSCH mapping type | $K_2$ | S | L |
|---|---|---|---|---|
| 8 | Type A | $j$+1 | 0 | 8 |
| 9 | Type A | $j$+1 | 0 | 12 |
| 10 | Type A | $j$+1 | 0 | 10 |
| 11 | Type A | $j$+2 | 0 | 6 |
| 12 | Type A | $j$+2 | 0 | 12 |
| 13 | Type A | $j$+2 | 0 | 10 |
| 14 | Type B | $j$ | 8 | 4 |
| 15 | Type A | $j$+3 | 0 | 8 |
| 16 | Type A | $j$+3 | 0 | 10 |

The foregoing S and L may respectively represent a begin symbol and a transmission length of PUSCH transmission.

**Table 3**

| $\mu_{PUSCH}$ | j for PUSCH processing capability 1 | j for PUSCH processing capability 3 |
|---|---|---|
| 0 | 1 | 2 |
| 1 | 1 | 2 |
| 2 | 2 | 4 |
| 3 | 3 | 8 |

The foregoing *PUSCH* may represent a SCS used by PUSCH.

The PUSCH processing capability 1 represents the first processing capability, and the PUSCH processing capability 3 represents the relaxed processing capability. It can be seen that the value of $K_2$ determined by the relaxed processing capability is twice the value of $K_2$ determined by the first processing capability.

It should be noted that the foregoing Table 3 is only an example, and j corresponding to the value of $K_2$ may be n (for example, n=2, and the value of n is prescribed by a protocol or configured by a network) times of j corresponding to the value of $K_2$ determined by the first processing capability. For example, the value is 2j, 2(j+1), 2(j+2), or 2(j+3), and j corresponding to the value of $K_2$ is n×j (for example, n=2, and the value of n is prescribed by a protocol or configured by a network). That is, the value is 2j, 2j+1, 2j+2, or 2j+3; where the value of j is a value of j corresponding to the first processing capability defined by the protocol. For example, as shown in Table 4:

**Table 4**

| $\mu_{PUSCH}$ | j |
|---|---|
| 0 | 1 |
| 1 | 1 |
| 2 | 2 |
| 3 | 3 |

In some embodiments, the value of $\Delta$ determined by the relaxed processing capability is equal to the value of $\Delta$ determined by the first processing capability, or the value of $\Delta$ determined by the relaxed processing capability is greater than the value of $\Delta$ determined by the first processing capability.

For example, the value of the foregoing $\Delta$ may be shown in Table 5 or Table 6:

**Table 5**

| $\mu_{PUSCH}$ | $\Delta$ |
|---|---|
| 0 | 2 |
| 1 | 3 |
| 2 | 4 |
| 3 | 6 |

**Table 6**

| $\mu_{PUSCH}$ | $\Delta$ for PUSCH processing capability 1 | $\Delta$ for PUSCH processing capability 3 |
|---|---|---|
| 0 | 2 | 4 |
| 1 | 3 | 6 |
| 2 | 4 | 8 |
| 3 | 6 | 14 |

It can be seen from Table 6 that $\Delta$ determined by the relaxed processing capability is n times the value of $\Delta$ determined by the first processing capability (if n=2, the value of n is prescribed by a protocol or configured by a network), for example, the value is 2 $\Delta$.

In some embodiments, the value of $\Delta'$ determined by the relaxed processing capability is equal to the value of $\Delta'$ determined by the first processing capability, or the value of $\Delta'$ determined by the relaxed processing capability is greater than the value of $\Delta'$ determined by the first processing capability.

For example, the value of the foregoing $\Delta'$ may be shown in Table 7:

**Table 7**

| $\mu_{PUSCH}$ | $\Delta'$ |
|---|---|
| 0 | 1 |
| 1 | 2 |
| 2 | 5 |
| 3 | 8 |

In the foregoing embodiment, the time for sending PUSCH can be relaxed so as to further improve the access reliability. In addition,

In the foregoing embodiment, the value of X is determined by the relaxed processing capability in a case that the terminal uses the relaxed processing capability for uplink transmission, and uses a default time domain resource allocation table (pusch-TimeDomainAllocationList) and/or a time domain resource allocation table configured using a PUSCH common configuration (pusch-ConfigCommon). The default time domain resource allocation list may include at least one of Table 1 and Table 2.

In this embodiment of this application, a terminal executes a communication operation based on a relaxed processing capability, where the relaxed processing capability is a relaxed processing capability in time, and the communication operation includes at least one of the following: a communication operation associated with initial access; and a communication operation associated with random access. In this way, at least one of the communication operation associated with initial access and the communication operation associated with random access can be executed based on the relaxed processing capability in time, such that the reliability of terminal access can be improved.

The relaxed processing capability being UE processing capability 3 is used as an example below to describe the communication operation execution method provided in this embodiment of this application through several embodiments.

Embodiment 1:

This embodiment is mainly described by the following three cases.

Case 1: If a network configures a separate initial DL BWP (separate initial DL BWP) for a terminal and Type 1 CSS is configured in the separate initial DL BWP, to be specific, a target terminal needs to monitor downlink signaling of scheduled Msg.3 in a public search space set of Type 1 for random access, the network assumes that a processing time for downlink reception and uplink transmission related to random access of the terminal is determined based on UE processing capability 3.

Case 2: If a network enables a function of early identification for a target terminal, the early identification can at least identify a processing time that the terminal supports relaxation, in other words, UE processing capability 3, and the early identification is carried by Msg.1. In a case that the terminal initiates random access to the network using Msg.1 with an early identification function, the network assumes that the processing time for downlink reception and uplink transmission associated with random access by the terminal is determined based on UE processing capability 3.

Case 3: If a capability of reducing a maximum bandwidth of a terminal is defined as reducing a maximum bandwidth capability of a baseband (BB), for example, a maximum bandwidth capability of a radio frequency (RF) being 20 MHz, and the maximum bandwidth capability of the baseband being 5 MHz, in a case that a bandwidth of the initial BWP operated by the terminal exceeds 5 MHz, or a bandwidth occupied by a frequency domain resource where Type 1 CSS configured for the terminal is located exceeds 5 MHz, or the scheduled uplink transmission and the bandwidth occupied by frequency domain resource for downlink reception exceeds 5 MHz, the network assumes that the processing time for downlink reception and uplink transmission associated with random access of the target terminal is determined based on UE processing capability 3.

For the foregoing cases 1, 2 and 3, the terminal uses UE processing capability 3 to prepare for the following uplink transmission:

PUSCH (initial transmission of Msg.3) scheduled by RAR UL grant/fallback RAR; and
PUSCH (retransmission of Msg.3) scrambled with TC-RNTI and scheduled by DCI format 0_0.

For HARQ-ACK feedback correctly received by Msg.4 or Msg.B, that is, in response to PDSCH reception with a terminal contention resolution identifier, the terminal transmits HARQ-ACK information in the PUCCH. It may be specified that a minimum time between a last symbol of the PDSCH reception and a first symbol of the corresponding PUCCH transmission with HARQ-ACK information is equal to $N_{T,1}$ + 0.5milliseconds, where $N_{T,1}$ is duration of N1 symbols corresponding to the PDSCH processing time of UE processing capability 3 when PDSCH DM-RS is added. To be specified, the terminal does not expect the time between the first symbol of the PUCCH transmission and the last symbol of the PDSCH reception to be less than $N_{T,1}$ + 0.5, where $N_{T,1}$ is duration of N1 symbols corresponding to the PDSCH processing time of UE processing capability 3 when PDSCH DM-RS is added.

Embodiment 2:

In this embodiment, transmitting a PUSCH is mainly used as an example, which may specifically include:
in a case that the terminal uses UE processing capability 3 for uplink transmission, and the used time domain resource allocation (Time Domain Resource Allocation, TDRA) table is a default time domain resource allocation table (for example, Table 1 mentioned above), for the PUSCH scheduled by RAR UL grant/fallback RAR, it is assumed that an SCS of a PDSCH carrying RAR UL grant/fallback RAR and an SCS of a PUSCH are both 15 KHz.

Example 1: If a last symbol of a PDSCH carrying RAR UL grant/fallback RAR is located in slot 1 and TDRA indicates row index corresponding to row 8, the terminal transmits a PUSCH in slot $1+K_2+\Delta$, where $\Delta$ use a value shown in Table 5 mentioned above;

in a case that a value of j is from Table 3, $1+(j+1)+\Delta=1+(2+1)+2=6$;
a value of $K_2$ is $\mu_{PUSCH}=0$ in table 1, that is, 15 KHz, and the row index is twice the value show in row 8, that is, $K_2=2\times(j+1)=2\times(1+1)=4$, where the value of j is shown in Table 4, $1+K_2+\Delta=1+4+2=7$; and
a value of $K_2$ is $\mu_{PUSCH}=0$ in table 1, that is, 15 KHz, and the row index is the value show in row 8, where if j is replaced by $n\times j$, $K_2=n\times j+1$; and if n=2 and a value of j is shown in Table 4, $1+K_2+\Delta=1+2\times j+1=1+2\times1+1=4$.

Example 2: If a last symbol of a PDSCH carrying RAR UL grant/fallback RAR is located in slot 1 and TDRA indicates row index corresponding to row 1, the target terminal transmits a PUSCH in slot $1+K_2+\Delta=1+j+\Delta$, where a value of j is j for PUSCH processing capability 3 in Table 3;

in a case that a value of $\Delta$ is from Table 6, $1+2+\Delta=1+2+4=7$; and

in a case that $\Delta$ is n times the value shown in Table 6 (for example, n=1), 1+2+$\Delta$=1+2+2=5.

Example 3: If a last symbol of a PDSCH carrying RAR UL grant/fallback RAR is located in slot 8 and TDRA indicates row index corresponding to row 1, the target terminal transmits a PUSCH in slot 1+$K_2$+$\Delta$ + $\Delta$'=1+(j+1)+$\Delta$ + $\Delta$', where if a value of j is from Table 3, a value of $\Delta$ is from Table 5,

in a case that $\Delta$' is configured by the network and the value of 15 KHz SCS is 0, 1+$K_2$+$\Delta$ + $\Delta$'=1+(2+1)+2+0=6; and
in a case that $\Delta$' is determined by Table 7, 1+$K_2$+$\Delta$ + $\Delta$'=1+(2+1)+2+1=7.

In this embodiment of this application, the relaxed processing time of the terminal is effectively supported to be applied to the initial access procedure and the random access procedure, thereby reducing implementation costs and complexity of the terminal, and further supporting flexible deployment of a system on a network side. For example, if the network side configures an independent initial BWP for the terminal or enables an early identification scheme, the scheduling of the terminal by the network side does not affect other terminals (for example, other types of terminals), otherwise, the network can schedule all terminals according to a relaxed timing relationship of the terminals.

The communication operation execution method provided in this embodiment of this application can be executed by a communication operation execution apparatus. In this embodiment of this application, assuming that the communication operation execution apparatus executes the communication operation execution method, the communication operation execution method provided in this embodiment of this application is described.

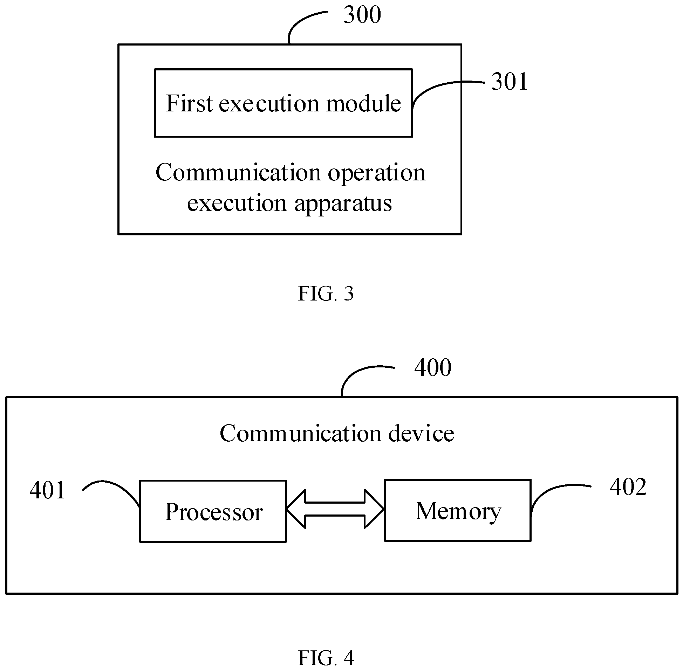

Refer to FIG. 3. FIG. 3 is a structural diagram of a communication operation execution apparatus according to an embodiment of this application. As shown in FIG. 3, the apparatus includes:
a first execution module 301, configured to execute a communication operation based on a relaxed processing capability, where the relaxed processing capability is a relaxed processing capability in time, and the communication operation includes at least one of the following:

a communication operation associated with initial access; and
a communication operation associated with random access.

Optionally, the relaxed processing capability includes at least one of the following:
an uplink relaxed processing capability, a downlink relaxed processing capability, and a channel state information CSI relaxed processing capability.

Optionally, the downlink relaxed processing capability includes:

a physical downlink shared channel PDSCH relaxed processing capability; where
based on the PDSCH relaxed processing capability, the number of PDSCHs supported or processed by the terminal in a target time period is N, the PDSCH is a PDSCH scrambled with a radio network temporary identifier RNTI and carrying a plurality of different transport blocks, and N is an integer greater than or equal to 1.

Optionally, the uplink relaxed processing capability includes:

a physical uplink shared channel PUSCH relaxed processing capability; where
based on the PUSCH relaxed processing capability, the number of PUSCHs supported or processed by the terminal in a target time period is M, the PUSCH is a PUSCH scrambled with an RNTI and carrying a plurality of different transport blocks, and M is an integer greater than or equal to 1.

Optionally, the relaxed processing capability is configured in at least one of the following ways:

the uplink relaxed processing capability is configured separately;
the downlink relaxed processing capability is configured separately;
the CSI relaxed processing capability is configured separately;
the uplink relaxed processing capability and the downlink relaxed processing capability are configured jointly/commonly; and
the uplink relaxed processing capability, the downlink relaxed processing capability, and the CSI relaxed processing capability are configured jointly/commonly.

Optionally, in a case that the terminal is configured with the relaxed processing capability, the terminal is further configured with a target characteristic, where the target characteristic includes at least one of the following:

a maximum supported bandwidth is less than or equal to a preset bandwidth threshold; and
a data rate is less than or equal to a preset rate threshold.

Optionally, in a case that the terminal is configured with the relaxed processing capability, the terminal is further configured with a first processing capability; where
a processing time of the relaxed processing capability is longer than a processing time of the first processing capability.
Optionally, a subcarrier spacing SCS to which the relaxed processing capability is applicable includes at least one of the following:

15 KHz SCS, 30 KHz SCS, 60 KHz SCS, and 120 KHz SCS; where
PDSCH decoding times are different for different SCSs in the relaxed processing capability; and/or PUSCH preparation times are different for different SCSs in the relaxed processing capability.

Optionally, for the relaxed processing capability, the terminal needs to report/indicate support of the relaxed processing capability through a terminal capability;

for the relaxed processing capability, the terminal reports/indicates, through a terminal capability, whether the terminal supports the relaxed processing capability; or
for the relaxed processing capability, the terminal does not report/indicate the relaxed processing capability.

Optionally, the communication operation associated with initial access includes at least one of the following:

uplink transmission in an initial access procedure; and
downlink reception in an initial access procedure; and
the communication operation associated with random access includes at least one of the following:

uplink transmission in a random access procedure; and
downlink reception in a random access procedure.

Optionally, the first execution module 301 is configured to execute the communication operation based on the relaxed processing capability in a case of meeting a first condition; where
the first condition includes at least one of the following:

a network-side device has configured/enabled/indicated a bandwidth part BWP for the terminal;
a network-side device has configured/enabled/indicated a common search space CSS for the terminal;
a network-side device has configured/enabled/indicated, for the terminal, early identification of the terminal enabled/executed through a physical random access channel PRACH;
a network-side device has configured/enabled/indicated, for the terminal, early identification of the terminal enabled/executed through a PUSCH;
a bandwidth of an initial BWP exceeds a maximum bandwidth capacity of a baseband side of the terminal;
a bandwidth of a control resource set configured by a master information block MIB exceeds a maximum bandwidth capacity of a baseband side of the terminal;
a bandwidth occupied by a scheduled/configured frequency domain resource for downlink reception exceeds a maximum bandwidth capacity of a baseband side of the terminal; and
a bandwidth occupied by a scheduled/configured frequency domain resource for uplink transmission exceeds a maximum bandwidth capacity of a baseband side of the terminal.

Optionally, the PRACH includes a PRACH of message 1 Msg.1/message A Msg.A in a random access procedure; and
the PUSCH includes a PUSCH of message 1 Msg.1/message A Msg.A in a random access procedure.
Optionally, the apparatus further includes:

a second execution module, configured to, in a case that the terminal does not meet the first condition, the terminal executes the communication operation based on a first processing capability; where
a processing time of the relaxed processing capability is longer than a processing time of the first processing capability.

Optionally, at least one of the following related to the communication operation is determined based on the relaxed processing capability:

uplink transmission timeline, and uplink transmission timing.

Optionally, in a case that the communication operation includes transmitting a PUSCH scheduled by a random access response RAR uplink grant, a shortest time between a PDSCH carrying the RAR uplink grant and the PUSCH is determined by the relaxed processing capability; and/or

in a case that the communication operation includes transmitting a PUSCH scheduled by a fallback RAR, a shortest time between a PDSCH carrying the fallback RAR and the PUSCH is determined by the relaxed processing capability.

Optionally, the shortest time is determined by a PDSCH processing time and a PUSCH preparation time; where the PDSCH processing time is determined by the relaxed processing capability, and/or the PUSCH preparation time is determined by the relaxed processing capability.

Optionally, in a case that an SCS corresponding to the PDSCH and an SCS corresponding to the PUSCH are different, the PDSCH processing time is determined by the relaxed processing capability and a first SCS, and/or the PUSCH preparation time is determined by the relaxed processing capability and a first SCS; where the first SCS is the smaller of two SCSs corresponding to the PDSCH and PUSCH.

Optionally, the communication operation includes:

transmitting a PUSCH in slot n+X, where slot n is a slot in which the terminal has received a last symbol of downlink signaling for scheduling uplink transmission, a value of X is determined by the relaxed processing capability, and the PUSCH includes at least one of the following:

PUSCH associated with initial access; and
PUSCH associated with random access.

Optionally, the value of X includes one of the following:

$$X=K_2, \; X=K_2+\Delta, \; X=K_2+\Delta+\Delta',$$

where
$K_2$ represents a slot offset, $\Delta$ and $\Delta'$ are constants related to SCS, and a value of at least one of $K_2$, $\Delta$, and $\Delta'$ is determined by the relaxed processing capability.

Optionally, the apparatus further includes at least one of the following:

a determination module, configured to determine the relaxed processing capability; and
a receiving module, configured to receive a downlink message/uplink message related to the communication operation.

The transmission determining apparatus can improve the transmission performance of the terminal.

The transmission determining apparatus in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal listed in the embodiments of this application, and the another device may be a server, a network attached storage (Network Attached Storage, NAS), or the like, which are not specifically limited in the embodiments of this application.

The transmission determining apparatus provided in this embodiment of this application can implement the processes implemented by the method embodiment in FIG. 2, with the same technical effects achieved. To avoid repetition, details are not described herein again.

Optionally, as shown in FIG. 4, an embodiment of this application further provides a communication device 400 including a processor 401 and a memory 402, where a program or instructions are stored in the memory 402 and capable of running on the processor 401. For example, in a case that the communication device 400 is a terminal, when the program or instructions are executed by the processor 401, the steps of the foregoing embodiment of the communication operation execution method are implemented, with the same technical effects achieved.

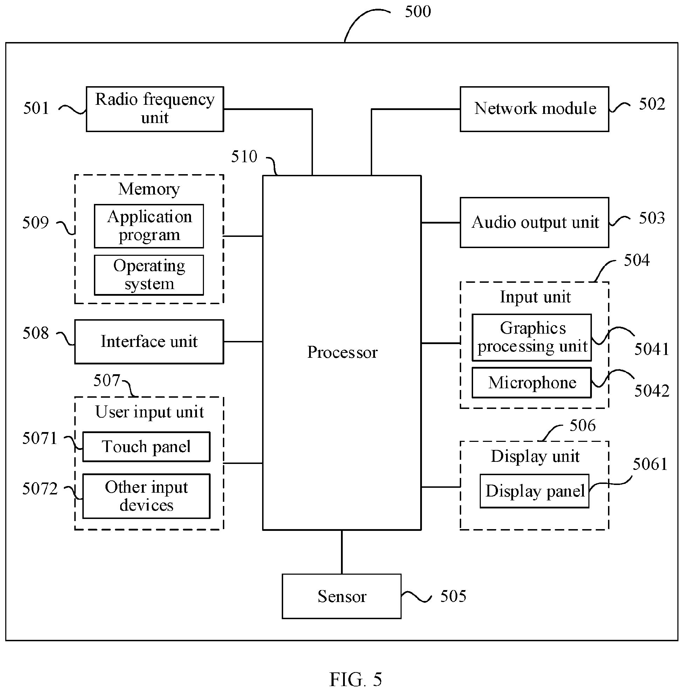

An embodiment of this application further provides a terminal including a processor and a communication interface, where the communication interface is configured to execute a communication operation based on a relaxed processing capability, where the relaxed processing capability is a relaxed processing capability in time, and the communication operation includes at least one of the following: a communication operation associated with initial access; and a communication operation associated with random access. This terminal embodiment corresponds to the foregoing method embodiment on the terminal side. All implementations in the foregoing method embodiment may be applicable to this terminal embodiment, with the same technical effect achieved. Specifically, FIG. 5 is a schematic diagram of a hardware structure of a terminal for implementing embodiments of this application.

The terminal 500 includes, but is not limited to, at least some of components such as a radio frequency unit 501, a network module 502, an audio output unit 503, an input unit 504, a sensor 505, a display unit 506, a user input unit 507, an interface unit 508, a memory 509, and a processor 510.

Persons skilled in the art can understand that the terminal 500 may further include a power supply (for example, a battery) for supplying power to the components. The power supply may be logically connected to the processor 510 through a power management system. In this way, functions such as charge management, discharge management, and power consumption management are implemented by using the power management system. The structure of the terminal shown in FIG. 5 does not constitute any limitation on the terminal, and the terminal may include more or fewer components than shown in the figure, or combine some of the components, or have different arrangements of the components. Details are not described herein.

It should be understood that in this embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in a video capture mode or an image capture mode. The display unit 506 may include a display panel 5061. The display panel 5061 may be configured in a form of a liquid crystal display, an organic light-emitting diode display, or the like. The user input unit 507 includes at least one of a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (for example, a volume control key or an on/off key), a trackball, a mouse, and a joystick. Details are not described herein.

In this embodiment, after receiving downlink data from a network-side device, the radio frequency unit 501 can transmit the downlink data to the processor 510 for processing. In addition, the radio frequency unit 501 can transmit uplink data to the network-side device. Generally, the radio frequency unit 501 includes but is not limited to an antenna, an amplifier, a transceiver, a coupler, a low noise amplifier, a duplexer, and the like.

The memory 509 may be configured to store software programs or instructions and various data. The memory 509 may include first storage area for storing programs or instructions and a second storage area for storing data. The first storage area may store an operating system, an application program or instruction required by at least one function (for example, a sound playback function or an image playback function), and the like. In addition, the memory 509 may include either a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 509 in this embodiment of this application includes but is not limited to these and any other suitable types of memories.

The processor 510 may include one or more processing units. Optionally, an application processor and a modem processor are integrated in the processor 510. The application processor primarily processes operations relating to an operating system, user interfaces, application programs, and the like. The modem processor primarily processes radio communication signals, for example, being a baseband processor. It can be understood that the modem processor may alternatively be not integrated in the processor 510.

The radio frequency unit 501 is configured to execute a communication operation based on a relaxed processing capability, where the relaxed processing capability is a relaxed processing capability in time, and the communication operation includes at least one of the following:

a communication operation associated with initial access; and
a communication operation associated with random access.

Optionally, the relaxed processing capability includes at least one of the following:
an uplink relaxed processing capability, a downlink relaxed processing capability, and a channel state information CSI relaxed processing capability.

Optionally, the downlink relaxed processing capability includes:

a physical downlink shared channel PDSCH relaxed processing capability; where
based on the PDSCH relaxed processing capability, the number of PDSCHs supported or processed by the terminal in a target time period is N, the PDSCH is a PDSCH scrambled with a radio network temporary identifier RNTI and carrying a plurality of different transport blocks, and N is an integer greater than or equal to 1.

Optionally, the uplink relaxed processing capability includes:

a physical uplink shared channel PUSCH relaxed processing capability; where
based on the PUSCH relaxed processing capability, the number of PUSCHs supported or processed by the terminal in a target time period is M, the PUSCH is a PUSCH scrambled with an RNTI and carrying a plurality of different transport blocks, and M is an integer greater than or equal to 1.

Optionally, the relaxed processing capability is configured in at least one of the following ways:

the uplink relaxed processing capability is configured separately;
the downlink relaxed processing capability is configured separately;
the CSI relaxed processing capability is configured separately;
the uplink relaxed processing capability and the downlink relaxed processing capability are configured jointly/commonly; and
the uplink relaxed processing capability, the downlink relaxed processing capability, and the CSI relaxed processing capability are configured jointly/commonly.

Optionally, in a case that the terminal is configured with the relaxed processing capability, the terminal is further configured with a target characteristic, where the target characteristic includes at least one of the following:

a maximum supported bandwidth is less than or equal to a preset bandwidth threshold; and
a data rate is less than or equal to a preset rate threshold.

Optionally, in a case that the terminal is configured with the relaxed processing capability, the terminal is further configured with a first processing capability; where
a processing time of the relaxed processing capability is longer than a processing time of the first processing capability.

Optionally, a subcarrier spacing SCS to which the relaxed processing capability is applicable includes at least one of the following:

15 KHz SCS, 30 KHz SCS, 60 KHz SCS, and 120 KHz SCS; where
PDSCH decoding times are different for different SCSs in the relaxed processing capability; and/or PUSCH preparation times are different for different SCSs in the relaxed processing capability.

Optionally, for the relaxed processing capability, the terminal needs to report/indicate support of the relaxed processing capability through a terminal capability;

for the relaxed processing capability, the terminal reports/indicates, through a terminal capability, whether the terminal supports the relaxed processing capability; or
for the relaxed processing capability, the terminal does not report/indicate the relaxed processing capability.

Optionally, the communication operation associated with initial access includes at least one of the following:

uplink transmission in an initial access procedure; and
downlink reception in an initial access procedure; and
the communication operation associated with random access includes at least one of the following:

uplink transmission in a random access procedure; and
downlink reception in a random access procedure.

Optionally, the executing, by a terminal, a communication operation based on a relaxed processing time capability includes:

executing, by the terminal, the communication operation based on the relaxed processing capability in a case of meeting a first condition; where
the first condition includes at least one of the following:

a network-side device has configured/enabled/indicated a bandwidth part BWP for the terminal;

a network-side device has configured/enabled/indicated a common search space CSS for the terminal;

a network-side device has configured/enabled/indicated, for the terminal, early identification of the terminal enabled/executed through a physical random access channel PRACH;

a network-side device has configured/enabled/indicated, for the terminal, early identification of the terminal enabled/executed through a PUSCH;

a bandwidth of an initial BWP exceeds a maximum bandwidth capacity of a baseband side of the terminal;

a bandwidth of a control resource set configured by a master information block MIB exceeds a maximum bandwidth capacity of a baseband side of the terminal;

a bandwidth occupied by a scheduled/configured frequency domain resource for downlink reception exceeds a maximum bandwidth capacity of a baseband side of the terminal; and

a bandwidth occupied by a scheduled/configured frequency domain resource for uplink transmission exceeds a maximum bandwidth capacity of a baseband side of the terminal.

Optionally, the PRACH includes a PRACH of message 1 Msg.1/message A Msg.A in a random access procedure; and

the PUSCH includes a PUSCH of message 1 Msg.1/message A Msg.A in a random access procedure.

Optionally, the radio frequency unit 501 is further configured to:

in a case that the terminal does not meet the first condition, the terminal executes the communication operation based on a first processing capability; where

a processing time of the relaxed processing capability is longer than a processing time of the first processing capability.

Optionally, at least one of the following related to the communication operation is determined based on the relaxed processing capability:

uplink transmission timeline, and uplink transmission timing.

Optionally, in a case that the communication operation includes transmitting a PUSCH scheduled by a random access response RAR uplink grant, a shortest time between a PDSCH carrying the RAR uplink grant and the PUSCH is determined by the relaxed processing capability; and/or

in a case that the communication operation includes transmitting a PUSCH scheduled by a fallback RAR, a shortest time between a PDSCH carrying the fallback RAR and the PUSCH is determined by the relaxed processing capability.

Optionally, the shortest time is determined by a PDSCH processing time and a PUSCH preparation time; where the PDSCH processing time is determined by the relaxed processing capability, and/or the PUSCH preparation time is determined by the relaxed processing capability.

Optionally, in a case that an SCS corresponding to the PDSCH and an SCS corresponding to the PUSCH are different, the PDSCH processing time is determined by the relaxed processing capability and a first SCS, and/or the PUSCH preparation time is determined by the relaxed processing capability and a first SCS; where

the first SCS is the smaller of two SCSs corresponding to the PDSCH and PUSCH.

Optionally, the communication operation includes:

transmitting a PUSCH in slot n+X, where slot n is a slot in which the terminal has received a last symbol of downlink signaling for scheduling uplink transmission, a value of X is determined by the relaxed processing capability, and the PUSCH includes at least one of the following:

PUSCH associated with initial access; and
PUSCH associated with random access.

Optionally, the value of X includes one of the following:

$$X = K_2, \ X = K_2 + \Delta, \ X = K_2 + \Delta + \Delta',$$

where

$K_2$ represents a slot offset, $\Delta$ and $\Delta'$ are constants related to SCS, and a value of at least one of $K_2$, $\Delta$, and $\Delta'$ is determined by the relaxed processing capability.

The terminal can improve the reliability of terminal access.

An embodiment of this application further provide a readable storage medium, where the readable storage medium stores a program or instructions, and when the program or instructions are executed by a processor, the processes of the foregoing communication operation execution method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement each process of the foregoing transmission determining method embodiment, with the same technical effect achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a storage medium, and when the computer program product is executed by at least one processor so as to implement the steps of the foregoing communication operation execution method embodiment, with the same technical effects achieved. To avoid repetition, details are not described herein again.

An embodiment of this application further provides a transmission determining system, including a terminal and a network-side device, where the terminal can be configured to execute the steps of the communication operation execution method.

An embodiment of this application further provides a communication device, where the communication device is configured to execute the various processes of the embodiment of the communication operation execution method, with the same technical effect achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1.  A communication operation execution method, comprising:
    executing, by a terminal, a communication operation based on a relaxed processing capability, wherein the relaxed processing capability is a relaxed processing capability in time, and the communication operation comprises at least one of the following:

    a communication operation associated with initial access; and
    a communication operation associated with random access.

2.  The method according to claim 1, wherein the relaxed processing capability comprises at least one of the following:
    an uplink relaxed processing capability, a downlink relaxed processing capability, and a channel state information CSI relaxed processing capability.

3. The method according to claim 2, wherein the downlink relaxed processing capability comprises:

a physical downlink shared channel PDSCH relaxed processing capability; wherein
based on the PDSCH relaxed processing capability, the number of PDSCHs supported or processed by the terminal in a target time period is N, the PDSCH is a PDSCH scrambled with a radio network temporary identifier RNTI and carrying a plurality of different transport blocks, and N is an integer greater than or equal to 1.

4. The method according to claim 2, wherein the uplink relaxed processing capability comprises:

a physical uplink shared channel PUSCH relaxed processing capability; wherein
based on the PUSCH relaxed processing capability, the number of PUSCHs supported or processed by the terminal in a target time period is M, the PUSCH is a PUSCH scrambled with an RNTI and carrying a plurality of different transport blocks, and M is an integer greater than or equal to 1.

5. The method according to claim 2, wherein the relaxed processing capability is configured in at least one of the following ways:

the uplink relaxed processing capability is configured separately;
the downlink relaxed processing capability is configured separately;
the CSI relaxed processing capability is configured separately;
the uplink relaxed processing capability and the downlink relaxed processing capability are configured jointly/commonly; and
the uplink relaxed processing capability, the downlink relaxed processing capability, and the CSI relaxed processing capability are configured jointly/commonly.

6. The method according to any one of claims 1 to 5, wherein in a case that the terminal is configured with the relaxed processing capability, the terminal is further configured with a target characteristic, wherein the target characteristic comprises at least one of the following:

a maximum supported bandwidth is less than or equal to a preset bandwidth threshold; and
a data rate is less than or equal to a preset rate threshold.

7. The method according to any one of claims 1 to 5, wherein in a case that the terminal is configured with the relaxed processing capability, the terminal is further configured with a first processing capability; wherein
a processing time of the relaxed processing capability is longer than a processing time of the first processing capability.

8. The method according to any one of claims 1 to 5, wherein a subcarrier spacing SCS to which the relaxed processing capability is applicable comprises at least one of the following:

15 KHz SCS, 30 KHz SCS, 60 KHz SCS, and 120 KHz SCS; wherein
PDSCH decoding times are different for different SCSs in the relaxed processing capability; and/or PUSCH preparation times are different for different SCSs in the relaxed processing capability.

9. The method according to any one of claims 1 to 5, wherein for the relaxed processing capability, the terminal needs to report/indicate support of the relaxed processing capability through a terminal capability;

for the relaxed processing capability, the terminal reports/indicates, through a terminal capability, whether the terminal supports the relaxed processing capability; or
for the relaxed processing capability, the terminal does not report/indicate the relaxed processing capability.

10. The method according to claim 1, wherein the communication operation associated with initial access comprises at least one of the following:

uplink transmission in an initial access procedure; and
downlink reception in an initial access procedure; and
the communication operation associated with random access comprises at least one of the following:

uplink transmission in a random access procedure; and
downlink reception in a random access procedure.

11. The method according to claim 1, 2, 3, 4, 5, or 10, wherein the executing, by a terminal, a communication operation based on a relaxed processing time capability comprises:

executing, by the terminal, the communication operation based on the relaxed processing capability in a case of meeting a first condition; wherein
the first condition comprises at least one of the following:

a network-side device has configured/enabled/indicated a bandwidth part BWP for the terminal;
a network-side device has configured/enabled/indicated a common search space CSS for the terminal;
a network-side device has configured/enabled/indicated, for the terminal, early identification of the terminal enabled/executed through a physical random access channel PRACH;
a network-side device has configured/enabled/indicated, for the terminal, early identification of the terminal enabled/executed through a PUSCH;
a bandwidth of an initial BWP exceeds a maximum bandwidth capacity of a baseband side of the terminal;
a bandwidth of a control resource set configured by a master information block MIB exceeds a maximum bandwidth capacity of a baseband side of the terminal;
a bandwidth occupied by a scheduled/configured frequency domain resource for downlink reception exceeds a maximum bandwidth capacity of a baseband side of the terminal; and
a bandwidth occupied by a scheduled/configured frequency domain resource for uplink transmission exceeds a maximum bandwidth capacity of a baseband side of the terminal.

12. The method according to claim 11, wherein the PRACH comprises a PRACH of Msg.1/ Msg.A in a random access procedure; and
the PUSCH comprises a PUSCH of message 1 Msg.1/message A Msg.A in a random access procedure.

13. The method according to claim 11, wherein the method further comprises:

in a case that the terminal does not meet the first condition, executing, by the terminal, the communication operation based on a first processing capability; wherein
a processing time of the relaxed processing capability is longer than a processing time of the first processing capability.

14. The method according to any one of claims 1 to 5, wherein at least one of the following related to the communication operation is determined based on the relaxed processing capability:
uplink transmission timeline, and uplink transmission timing.

15. The method according to claim 14, wherein in a case that the communication operation comprises transmitting a PUSCH scheduled by a random access response RAR uplink grant, a shortest time between a PDSCH carrying the RAR uplink grant and the PUSCH is determined by the relaxed processing capability; and/or
in a case that the communication operation comprises transmitting a PUSCH scheduled by a fallback RAR, a shortest time between a PDSCH carrying the fallback RAR and the PUSCH is determined by the relaxed processing capability.

16. The method according to claim 15, wherein the shortest time is determined by a PDSCH processing time and a PUSCH preparation time; wherein
the PDSCH processing time is determined by the relaxed processing capability, and/or the PUSCH preparation time is determined by the relaxed processing capability.

17. The method according to claim 16, wherein in a case that an SCS corresponding to the PDSCH and an SCS corresponding to the PUSCH are different, the PDSCH processing time is determined by the relaxed processing capability and a first SCS, and/or the PUSCH preparation time is determined by the relaxed processing capability and a first SCS; wherein
the first SCS is the smaller of two SCSs corresponding to the PDSCH and PUSCH.

18. The method according to claim 14, wherein the communication operation comprises:
transmitting a PUSCH in slot n+X, wherein slot n is a slot in which the terminal has received a last symbol of downlink signaling for scheduling uplink transmission, a value of X is determined by the relaxed processing capability, and the PUSCH comprises at least one of the following:

PUSCH associated with initial access; and
PUSCH associated with random access.

19. The method according to claim 18, wherein the value of X comprises one of the following:

$$X=K2, \; X=K2+\Delta, \; \text{and} \; X=K2+\Delta+\Delta';$$

wherein
K2 represents a slot offset, $\Delta$ and $\Delta'$ are constants related to SCS, and a value of at least one of K2, $\Delta$, and $\Delta'$ is determined by the relaxed processing capability.

20. A communication operation execution apparatus, comprising:
an execution module, configured to execute a communication operation based on a relaxed processing capability, wherein the relaxed processing capability is a relaxed processing capability in time, and the communication operation comprises at least one of the following:

a communication operation associated with initial access;
a communication operation associated with random access.

21. A terminal, comprising a processor and a memory, wherein a program or instructions are stored in the memory and capable of running on the processor, and when the program or instructions are executed by the processor, the steps of the communication operation execution method according to any one of claims 1 to 19 are implemented.

22. A readable storage medium, wherein the readable storage medium stores a program or instructions, and when the program or instructions are executed by a processor, the steps of the communication operation execution method according to any one of claims 1 to 19 are implemented.

FIG. 1

Start

A terminal executes a communication operation based on a relaxed processing capability ⎯ 201

End

FIG. 2

300

First execution module ⌐ 301

Communication operation
execution apparatus

FIG. 3

400

Communication device

401 ⌐ Processor ⟷ Memory ⌐ 402

FIG. 4

FIG. 5

## INTERNATIONAL SEARCH REPORT

| | International application No. |
|---|---|
| | **PCT/CN2022/141546** |

**A. CLASSIFICATION OF SUBJECT MATTER**

H04W52/02(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; ENTXTC; 3GPP; CNKI: 用户, 处理, 能力, 放宽, 放松, 宽松, 时间, 接入, 通信, 网络, 上行, 下行, ue, processing, capability, relax, time, access, communication, network, uplink, downlink

**C. DOCUMENTS CONSIDERED TO BE RELEVANT**

| Category* | Citation of document, with indication, where appropriate, of the relevant passages | Relevant to claim No. |
|---|---|---|
| Y | CN 111148190 A (HUAWEI TECHNOLOGIES CO., LTD.) 12 May 2020 (2020-05-12) description, paragraphs 5-256 | 1-22 |
| Y | CN 110786030 A (BEIJING XIAOMI MOBILE SOFTWARE CO., LTD.) 11 February 2020 (2020-02-11) description, paragraphs 68-78 | 1-22 |
| A | CN 113271683 A (DATANG MOBILE COMMUNICATIONS EQUIPMENT CO., LTD.) 17 August 2021 (2021-08-17) entire document | 1-22 |
| A | CN 113475030 A (GUANGDONG OPPO MOBILE COMMUNICATIONS CO., LTD.) 01 October 2021 (2021-10-01) entire document | 1-22 |
| A | WO 2021230730 A1 (LG ELECTRONICS INC.) 18 November 2021 (2021-11-18) entire document | 1-22 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 March 2023** | **03 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

INTERNATIONAL SEARCH REPORT
Information on patent family members

| | | | International application No. |
|---|---|---|---|
| | | | **PCT/CN2022/141546** |

| Patent document cited in search report | | | Publication date (day/month/year) | Patent family member(s) | | | Publication date (day/month/year) |
|---|---|---|---|---|---|---|---|
| CN | 111148190 | A | 12 May 2020 | US | 2021258875 | A1 | 19 August 2021 |
| | | | | WO | 2020088660 | A1 | 07 May 2020 |
| | | | | EP | 3869873 | A1 | 25 August 2021 |
| | | | | EP | 3869873 | A4 | 22 December 2021 |
| CN | 110786030 | A | 11 February 2020 | US | 2022377530 | A1 | 24 November 2022 |
| | | | | WO | 2021051408 | A1 | 25 March 2021 |
| | | | | EP | 4033828 | A1 | 27 July 2022 |
| CN | 113271683 | A | 17 August 2021 | None | | | |
| CN | 113475030 | A | 01 October 2021 | None | | | |
| WO | 2021230730 | A1 | 18 November 2021 | KR | 20230011267 | A | 20 January 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202111640856